(19) Europäisches Patentamt

European Patent Office

Office européen des brevets

(11) **EP 0 830 963 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(51) Int Cl.⁷: **B60H 3/00**, B60H 1/00

(21) Anmeldenummer: **97110236.3**

(22) Anmeldetag: **23.06.1997**

(54) **Vorrichtung und Verfahren zur Steuerung von Luftführungselementen eines Fahrzeugs**

Apparatus and method for controlling air guiding elements in a vehicle

Dispositif et procédé pour contrôler des éléments de guidage d'air dans un véhicule

(84) Benannte Vertragsstaaten:
**DE ES FR GB SE**

(30) Priorität: **13.09.1996 DE 19637232**

(43) Veröffentlichungstag der Anmeldung:
**25.03.1998 Patentblatt 1998/13**

(73) Patentinhaber: **Behr GmbH & Co.**
**70469 Stuttgart (DE)**

(72) Erfinder:
• **Baruschke, Wilhelm**
**73117 Wangen (DE)**
• **Böhlendorf, Alexander**
**71032 Böblingen (DE)**
• **Flik, Markus, Dr.**
**70193 Stuttgart (DE)**
• **Käfer, Oliver**
**71711 Murr (DE)**
• **Kampf, Hans**
**71404 Korb (DE)**
• **Lochmahr, Karl**
**71665 Vaihingen (DE)**
• **Rinckleb, Tilo**
**74177 Bad Friedrichshall (DE)**
• **Schmadl, Dieter**
**89231 Neu-Ulm (DE)**

(56) Entgegenhaltungen:
EP-A- 0 825 044          DE-A- 2 950 179
US-A- 4 852 363

• PATENT ABSTRACTS OF JAPAN vol. 008, no. 116 (M-299), 30. Mai 1984 (1984-05-30) & JP 59 023721 A (NIPPON DENSO KK), 7. Februar 1984 (1984-02-07)

**Beschreibung**

Die Erfindung betrifft eine Heiz- oder Klimaanlage und ein Verfahren zur Steuerung einer Heiz- oder Klimaanlage eines Fahrzeugs nach dem Oberbegriff des Patentanspruchs 1 bzw. des Patentanspruchs 11.

Aus der **DE 195 09 495 C1** ist eine Vorrichtung zur Steuerung von Luftführungselementen eines Fahrzeugs bekannt, die in Abhängigkeit von Zustandsbedingungen das Luftführungselement von einem Frischluftbetrieb in einen Umluftbetrieb und umgekehrt schaltet. Die Umschaltung erfolgt in Abhängigkeit von der Außenlufttemperatur und dem Betriebszustand der Klimaanlage. Mittels einer Vielzahl von Zeitgliedern erfolgt abhängig von den Zustandsbedingungen jeweils in festgelegten Zeitintervallen abwechselnd ein Umluft- und ein Frischluftbetrieb. Nachteilig an der bekannten Vorrichtung ist, daß die Umschaltung von dem Frischluftbetrieb in den Umluftbetrieb und umgekehrt nicht in Abhängigkeit von allen relevanten Zustandsbedingungen abhängig ist. Ferner erfolgt lediglich eine Umschaltung des Luftführungselements von einer Endstellung in eine entgegengesetzte Endstellung, so daß keine Zwischenstellungen vorgesehen sind.

JP-A-59 023721 offenbart als nächsten Stand der Technik eine Klimaanlage gemäß dem Oberbegriff des Anspruchs 1 und ein Verfahren gemäß dem Oberbegriff des Anspruchs 11, bei denen ein Feuchte- und ein Schadgaswert zur Reglung einer Frischluft-/ Umluftklappe herangezogen werden.

Aufgabe der vorliegenden Erfindung ist es, eine Heiz- oder Klimaanlage mit steuerbaren Luftführungselementen eines Fahrzeugs auszubilden, so daß ein Höchstmaß an Luftreinheit in dem Fahrzeuginnenraum gewährleistet ist, wobei ein Scheibenbeschlag vermieden wird.

Zur Lösung der Aufgabe weist die Erfindung die Merkmale des Patentanspruchs 1 und des Patentanspruchs 11 auf.

Ein Vorteil der Erfindung liegt insbesondere darin, daß eine Umschaltung von einem Frischluftbetrieb in einen Umluftbetrieb oder umgekehrt in Abhängigkeit von einem Feuchtesignal eines im Fahrzeuginnenraum angeordneten Feuchtesensors erfolgt. Wird von dem Feuchtesensor ein maximaler Feuchtewert im Fahrzeuginnenraum detektiert, erfolgt eine Umschaltung von dem Umluftbetrieb in den Frischluftbetrieb, so daß das Beschlagen der Scheiben vermieden wird.

Nach der Erfindung kann das Luftführungselement in einer Zwischenstellung gehalten sein, so daß einerseits Frischluft und andererseits Umluft in den Fahrzeuginnenraum strömen kann. Hierdurch wird eine weitgehende Anpassung an die Wohlbefindlichkeitsbedürfnisse der Fahrzeuginsassen geschaffen, wobei ein Kompromiss geschlossen wird zwischen der Luftgüte und der Feuchtigkeit in dem Fahrzeuginnenraum. Bei fortwährender hoher Schadstoffbelastung wird das Luftführungselement von einer Umluftstellung in eine Zwischenstellung gebracht, in der sich der dem Fahrzeuginnenraum zugeführte Luftstrom aus einem kleinen Frischluftanteil und einem großen Umluftanteil zusammensetzt. Diese Verstellung des Luftführungselements erfolgt, sobald das von dem Feuchtesensor erzeugte Feuchtesignal derart angestiegen ist, daß mit einem Beschlagen der Scheiben zu rechnen ist. Somit kann auch bei länger andauernder hoher Schadstoffkonzentration der Umgebungsluft zum einen ein Beschlagen der Scheiben vermieden und zum anderen die Schadstoffbelastung für die Fahrzeuginsassen auf ein Minimum reduziert werden.

Zusätzlich zu dem Feuchtesensor kann ein Umlufttrockner vorgesehen sein, so daß der maximal zulässige Feuchtewert erst nach einer längeren Umluftbetriebsdauer auftritt und somit längere Zeit im Umluftbetrieb gefahren werden kann, ohne daß ein Beschlagen der Scheiben auftritt. Der Einsatz eines Umlufttrockners ist besonders vorteilhaft bei längeren Tunnelfahrten oder allgemein bei hohen Schadstoffbelastungen der Außenluft, beispielsweise im Stau oder stop-and-go-Verkehr.

Bei Einsatz eines kontinuierlich arbeitenden Umlufttrockners, dessen Trocknerelemente kontinuierlich desorbierbar sind, und dessen Absorptionsfähigkeit groß genug ist, ist es möglich, ohne zeitliche Begrenzung im Umluftbetrieb zu fahren, ohne daß die Scheiben beschlagen.

Nach einer Weiterbildung der Erfindung wird die Feuchte des Fahrzeuginnenraums in einem schadstofffreien Gebiet auf einen das Wohlbefinden der Fahrzeuginsassen fördernden Soll-Feuchtewert geregelt. Diese Feuchteregelung wirkt auf die Stellung des Luftführungselements ein und bewirkt eine solche Stellung desselben, daß beispielsweise durch Erhöhung des feuchten Umluftanteils und einer Verringerung des relativ trockenen Frischluftanteils ein plötzliches Absinken des Feuchtewertes ausgeglichen wird. Die Feuchteregelung dient neben der Vermeidung des Scheibenbeschlags auch zur Erhöhung des Wohlbehagens der Fahrzeuginsassen.

Nach einer Ausgestaltung der Erfindung ist zur Detektion der Außenfeuchte eine weiterer Feuchtesensor vorgesehen. Die gemessene Außenfeuchte kann dann bei der Regelung der Innnenraumfeuchte durch das Luftführungselement berücksichtigt werden, so daß die erfindungsgemäße Vorrichtung schnell auf plötzliche Änderungen der Außenfeuchte, beispielsweise bei der Fahrt durch einen Platzregen, reagieren kann.

Nach einer Ausgestaltung der Erfindung ist eine Steuereinheit vorgesehen, die einen Mikroprozessor und einen Speicher aufweist, in dem ein Steuerprogramm gespeichert ist. Mittels des Steuerprogramms läßt sich auf einfache Weise eine feuchte- und schadstoffabhängige Steuerung des Luftführungselements verwirklichen.

Bevorzugt wird die Frischluft und gegebenenfalls auch die Umluft über eine Filtereinheit geführt, so daß Staubpartikel und Schadstoffe aus der Luft filterbar sind. Bevorzugt bilden der Umlufttrockner und die Filtereinheit ein integrales Bauteil, wie dies beispielsweise aus der **DE 44 41 264** bekannt ist.

Wenn der Umlufttrockner und/oder die Filtereinheit über wenigstens einen Bypasskanal überbrückbar sind, kann die Luft, wenn sie beispielsweise nicht mit Schadstoffen belastet ist, bzw. keinen großen Feuchtigkeitsgehalt aufweist, durch den Bypasskanal geleitet werden, so daß für die Luftströmung eine niedrigere Gebläseleistung benötigt wird, da kein Druckabfall über den Filter und/oder den Umlufttrockner mehr auftritt. Der Bypasskanal ist über eine Bypassklappe verschließbar, die bevorzugt von der Steuereinheit gesteuert wird. Aufgrund der zentralen Steuerung durch die Steuereinheit kann beispielsweise der Feuchtigkeitsgehalt der Luft im Fahrzeuginnenraum einerseits durch das Verhältnis Umluft/Frischluft und andererseits dadurch geregelt werden, daß über die einstellbare Bypassklappe wenigstens ein Teilluftstrom über den Umlufttrockner geleitet wird. In anloger Weise läßt sich der Schadstoffgehalt der Luft im Fahrzeuginnenraum regeln.

Weitere Vorteile der Erfindung ergeben sich aus den weiteren Ansprüchen.

Ausführungsbeispiele der Erfindung werden nachfolgend anhand der Zeichnungen näher erläutert.

Es zeigen:

Fig. 1    Ein Blockschaltbild einer Steuerschaltung für ein Luftführungselement;

Fig. 2    ein Diagramm über den zeitlichen Verlauf einer Schadstoffkonzentration S, einer Feuchte $\phi$ und der Stellung des Luftführungselements;

Fig. 3    Darstellung der funktionalen Abhängigkeit der Stellung des Luftführungselements in Abhängigkeit von der Feuchte $\phi$;

Fig. 4    ein Programmablaufplan einer bevorzugten Ausführungsform der Erfindung;

Fig. 5    ein Blockschaltbild einer Regelschaltung für die Innenraumfeuchte und

Fig. 6    einen Ausschnitt einer Vorrichtung zur Luftführung.

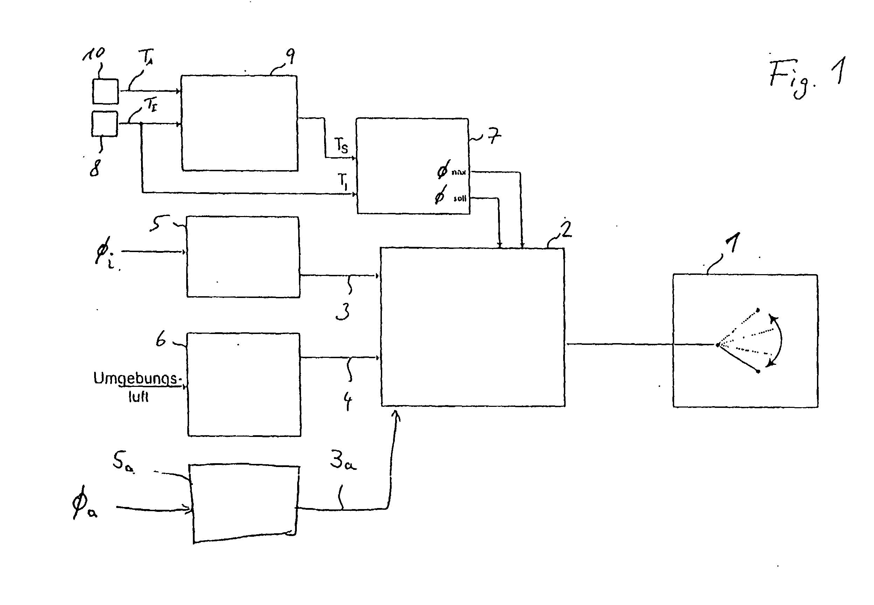

In **Fig. 1** ist ein Blockschaltbild der erfindungsgemäßen Steuerung eines als Umluft-/Frischluft-Klappe 1 ausgebildeten Luftführungselementes dargestellt. Die Umluft-/Frischluft-Klappe 1 ist durch eine nicht dargestellte Stellvorrichtung, beispielsweise einen Schrittmotor, in einer beliebigen Lage zwischen einer ersten Endstellung, in der ausschließlich Umluft in den Fahrzeuginnenraum geleitet wird, und einer zweiten Endstellung, in der ausschließlich Frischluft in den Fahrzeuginnenraum geleitet wird, einstellbar. Von einer Steuereinheit 2 erhält der Schrittmotor ein Steuersignal zur Steuerung der Klappe 1, so daß ein beliebiges Verhältnis zwischen Frischluft und Umluft in den Fahrzeuginnenraum zuführbar ist.

Die Steuereinheit 12 wird eingangsseitig mit einem Feuchtesensorsignal 3 und einem Schadgassensorsignal 4 beaufschlagt, die von einem innerhalb des Fahrzeuginnenraums angebrachten Feuchtesensor 5 bzw. von einem die Schadstoffkonzentration der Umgebungsluft detektierenden Schadgassensor 6 geliefert werden. Desweiteren kann ein außerhalb des Fahrzeugs angebrachter, weiterer Feuchtesensor 5a vorgesehen sein, um die Außenfeuchte $\phi_a$ zu messen und dessen Signal 3a ebenfalls der Steuereinheit zugeführt wird. Weiterhin ist die Steuereinheit 2 eingangsseitig mit einer Feuchterecheneinheit 7 verbunden, in der ein maximaler Innenfeuchtewert $\phi_{max}$ und ein Sollfeuchtewert $\phi_s$ berechnet werden. Der maximale Feuchtewert $\phi_{max}$ gibt den Wert an, bis zu dem die Feuchte im Fahrzeuginnenraum bei maximalem Umlufbetrieb ansteigen darf, ohne daß eine Gefahr des Scheibenbeschlags besteht. Der Sollwert $\phi_{soll}$ gibt den Wert der Feuchte an, der durch Steuerung bzw. Regelung bei einer Fahrt durch ein schadstoffarmes Gebiet durch entsprechende Stellung der Umluft/Frischluft-Klappe 1 eingestellt werden soll, so daß die Fahrzeuginsassen ein behagliches Gefühl empfinden. Die Feuchterecheneinheit 7 ist eingangsseitig zum einem mit einem die Innenraumtemperatur $T_I$ liefernden Innentemperatursensor 8 und zum anderen mit einer Scheibentemperaturrecheneinheit 9 verbunden. Die Scheibentemperaturrecheneinheit 9 ist eingangsseitig mit dem Innentemperatursensor 8 und einem Außentemperatursensor 10 verbunden. Nach folgender Gleichung wird in der Scheibentemperaturrecheneinheit 9 die Scheibentemperatur $T_S$ näherungsweise ermittelt:

$$T_S = \frac{5 \times T_A + 2 \times T_I}{7}$$

Die auf diese Weise berechnete Scheibentemperatur $T_S$ dient zusammen mit der Innenraumtemperatur $T_I$ zur Berechnung der maximalen Feuchte $\phi_{max}$. Nach Umstellung folgender Gleichung läßt sich der maximale Feuchtewert $\phi_{max}$ berechnen, der als Ausgangsgröße der Feuchterecheneinheit 7 die Steuereinheit 2 beaufschlagt.

$$\ln_{\phi max} = \frac{K_1}{K_2 + T_I} - \frac{K_1}{K_2 + T_S} = X$$

Der Sollfeuchtewert $\phi_{soll}$ ist ein Erfahrungswert und kann zum einen um einen konstanten Faktor unterhalb der maximalen Feuchte $\phi_{max}$ festgelegt werden oder zum anderen auch in Abhängigkeit von der Außenlufttemperatur $T_A$ beeinflußt werden. Vorzugsweise sind die Steuereinheit 2, die Feuchterecheneinheit 7 und die Scheibentemperaturrecheneinheit 9 als Bestandteil eines Mikrocontrollers integriert aufgebaut.

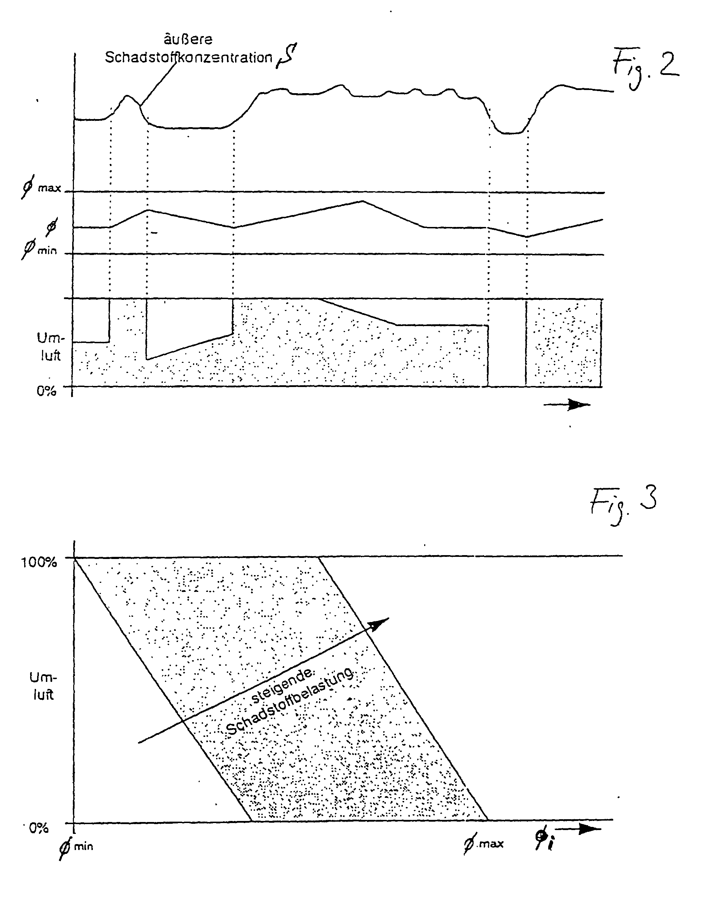

**Fig. 2** zeigt die Stellung der Umluft-/Frischluft-Klappe 1 in Abhängigkeit von der äußeren Schadstoffkonzentration S. Durchfährt das Fahrzeug ein schadstoffarmes Gebiet, wird die Klappe 1 derart gesteuert, daß ein konstanter Feuchtesollwert $\phi_{soll}$ im Fahrzeuginnenraum erzielt wird. Zur Erzielung einer mittleren Feuchte nimmt die Klappe 1 eine Mittelstellung ein, in der die Umluft und die Frischluft zu gleichen Anteilen dem Fahrzeuginnenraum zugeführt werden. Nimmt die Schadstoffkonzentration der Umgebungsluft stark zu, wird die Klappe 1 in den Umluftbetrieb verstellt, wobei das Feuchtesensorsignal 3 stetig ansteigt. Sinkt die Schadstoffkonzentration der Umgebungsluft unter einen vorgegebenen Schwellwert, wird auf Frischluftbetrieb umgeschaltet, und zwar mit einem geringen Anteil von Umluft, damit die Innenraumfeuchte kontinuierlich abnehmen kann, ohne daß starke Schwankungen entstehen. Bewegt sich das Fahrzeug durch ein Gebiet länger andauernder hoher Schadstoffkonzentration wird die Klappe 1 solange vollständig im Umluftbetrieb gehalten, bis das Feuchtesensorsignal 3 annähernd die Maximalfeuchte $\phi_{max}$ erreicht. Um einen Scheibenbeschlag zu verhindern, wird der Umluftanteil kontinuierlich abgesenkt, und zwar bis zu einem Wert, bei dem die Innneraumfeuchte $\phi_i$ im wesentlichen konstant weiterverläuft. Dabei wird es in Kauf genommen, daß ein kleinerer Anteil von Frischluft dem Fahrzeuginnenraum zugeführt wird. Andererseits wird durch diese Steuerung ein vollständiges Umschalten der Klappe 1 in den Frischluftbetrieb weitgehend vermieden. Ausschließlich bei Zustandsbedingungen, in denen die Luft einen hohen Feuchtegrad aufweist und das Fahrzeug während eines längeren Zeitraums durch ein Gebiet hoher Schadstoffdichte fährt, muß die Klappe 1 in die Frischluftendstellung gebracht werden. Ansonsten erfolgt dieser reine Frischluftbetrieb nur in Gebieten geringerer Schadstoffkonzentration, in denen die Umluft-/Frischluft-Klappe 1 manuell oder zur Regelung der Innenraumfeuchte $\phi_i$ in diese Stellung gebracht wird.

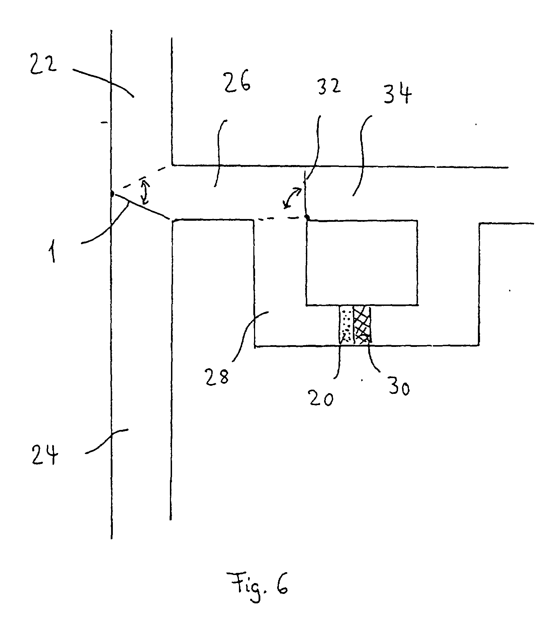

In einer anderen Ausführungsform der Erfindung kann ein Umlufttrockner 20 **(Fig. 6)** vorgesehen sein, mit dem der Umluft Feuchtigkeit entzogen wird. Der Umlufttrockner 20 kann beispielsweise ein sich kontinuierlich regenerierender Trockner sein, wie er beispelsweise aus der **DE 44 27 793** bekannt ist. Der Umlufttrockner 20 wird sinnvollerweise dann in den Luftweg zugeschaltet, wenn die Luft einen hohen Feuchtegrad aufweist und das Fahrzeug während eines längeren Zeitraums durch ein Gebiet hoher Schadstoffdichte fährt, um dann längere Zeit ausschließlich im Umluftbetrieb fahren zu können, ohne daß der Feuchtigkeitsgehalt der Luft derart ansteigt, daß die Scheiben beschlagen. Ist der Feuchtigkeitsgehalt der Luft niedrig, kann der Umlufttrockner 20 über einen Bypasskanal 34 überbrückt werden, so daß ein Druckabfall über den Umlufttrockner 20 vermieden wird und die Gebläseleistung reduziert werden kann.

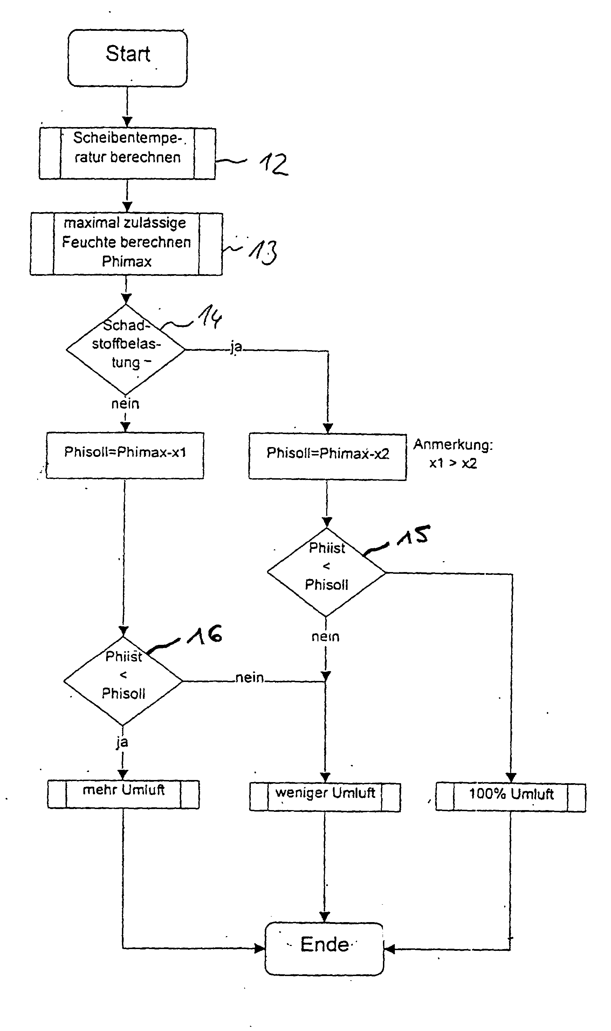

**Fig. 3** zeigt eine Steuerkennlinie, in der die Umluftstellung der Klappe 1 in Abhängigkeit von der Innenraumfeuchte $\phi_j$ dargestellt ist. Je größer die Innenraumfeuchte $\phi_i$ ist, desto kleiner ist der Umluftanteil, der durch die Stellung der Klappe 1 in den Fahrzeuginnenraum geleitet wird. Mit steigender Schadstoffbelastung muß jedoch ein höherer Innenraumfeuchtewert $\phi_i$ in Kauf genommen werden, damit die Fahrzeuginsassen weitgehend von der Schadstoffbelastung der Umgebung ferngehalten werden.

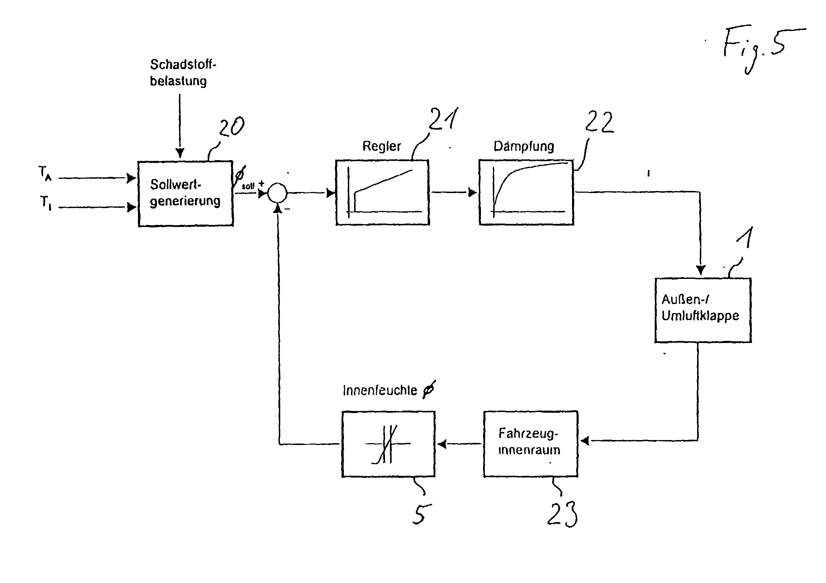

**Fig. 4** zeigt einen Ablaufplan eines Programms, das in einem Speicher des Mikrocontrollers abgespeichert ist und durch die Steuereinheit 2 abgearbeitet wird. Nach dem Start des Programms wird die Scheibentemperatur $T_S$ nach der oben angegebenen Rechenformel berechnet 12. Nachfolgend wird in einem Schritt 13 die maximal zulässige Feuchte $\phi max$ berechnet. In einem Folgeschritt 14 wird das momentane Schadgassensorsignal 4 mit einem vorgegebenen Schadstoffschwellwert verglichen. Ist das Schadgassensorsignal 4 größer als der Schwellwert, wird in einer Abzweigung der Sollfeuchtewert $\phi_{soll}$ durch Subtraktion eines konstanten Wertes X2 von dem berechneten Maximalwert $\phi max$ ermittelt. Ist die Schadstoffbelastung geringer als der vorgegebene Schwellwert, wird der Sollwert $\phi_{soll}$ durch Subtraktion eines konstanten Wertes X1, der größer ist als der konstante Wert X2, von dem berechneten Wert $\phi max$ ermittelt.

Im weiteren Verlauf wird in einem Schritt 15 das aktuelle Feuchtesensorsignal 3 mit dem Feuchtesollwert $\phi_{soll}$ verglichen. Bei Vorliegen einer Schadstoffbelastung wird für den Fall, daß der Feuchteistwert $\phi_{ist}$ kleiner als der Sollfeuchtewert $\phi_{soll}$ ist, auf 100% Umluft geschaltet. Ist jedoch das aktuelle Feuchtesensorsignal $\phi_{ist}$ größer als der Sollfeuchtewert $\phi_{soll}$, wird die Klappe 1 in eine Stellung gebracht, in der auch ein Anteil Frischluft dem Fahrzeuginnenraum zugeführt wird. Wird beim erneuten Durchlauf des Programms, festgestellt, daß der momentane Feuchtewert $\phi_{ist}$ noch größer ist als der Sollfeuchtewert $\phi_{soll}$, wird der Umluftanteil soweit verringert, bis der Sollfeuchtewert $\phi_{soll}$ erreicht ist. Auch bei Vorliegen geringer Schadstoffbelastung, d.h. das Schadgassensorsignal 4 ist kleiner als der Schadstoffschwellwert, erfolgt diese Abfrage in einem Schritt 16, wobei der Umluftanteil verringert wird, wenn der momentane Feuchtewert $\phi_{ist}$ nicht kleiner als der Sollfeuchtewert $\phi_{soll}$ ist. Der Umluftanteil wird erhöht, sofern der momentane Feuchtewert $\phi_{ist}$ kleiner als der Sollfeuchtewert $\phi_{soll}$ ist.. Nach Verstellung der Klappe 1 ist das Programm beendet und wird nachfolgend erneut gestartet.

Alternativ ist in **Fig. 5** ein Blockschaltbild einer Regelschaltung dargestellt, die die Innenraumfeuchte $\phi_i$ des Fahrzeugs auf einen vorgegebenen Sollfeuchtewert $\phi_{soll}$ regelt. Nach den oben beschriebenen Gleichungen kann aus der Außentemperatur $T_A$ und der Innentemperatur $T_I$ die Sollwertgenerierung 20 der Feuchte vorgenommen werden. Je höher die detektierte Schadstoffbelastung ist, desto höher wird auch der Sollwert der Feuchte generiert, damit der Frischluftanteil auf ein Minimum reduziert werden kann. Der auf diese Weise generierte Sollwert $\phi_{soll}$ wird mit einem die momentane Innenraumfeuchte $\phi_i$ repräsentierenden Signal verglichen, wobei die Regelabweichung auf den Eingang eines Reglers, beispielsweise eines PI-Reglers 21, gegeben wird. Nach anschließender Dämpfung in einem Dämpfungsschaltglied 22 wird die Umluft-/Frischluft-Klappe 1 derart in ihrer Stellung verändert, daß die Innenraumfeuchte $\phi_i$ der Sollfeuchte $\phi_{soll}$ angeglichen wird. Als Regelstrecke dient der Fahrzeuginnenraum 23, dem der Feuchtesensor 5 nachgeschaltet ist.

In **Fig. 6** ist ein Teil einer Vorrichtung zur Luftführung dargestellt. Die Umluft/Frischluft-Klappe 1 ist zwischen der ersten Einstellung (gestrichelt dargestellt) und der zweiten Einstellung, in der ausschließlich Frischluft durch den Frischluftkanal 22 in den Fahrzeuginnenraum geleitet wird, über die Steuereinheit 2 einstellbar. Die Frisch- und/oder Umluft ist über einen Kanal 26 dem Fahrzeuginnenraum zuführbar. An den Luftkanal 26 schließt sich ein Kanal 28 an, der die Luft über den Umlufttrockner 20 und bevorzugt einen Filter 30, der Staubpartikel und Schadstoffe adsorbieren kann, führt. Der Kanal 28 ist mittels einer Bypassklappe 32 verschließbar, die über die Steuereinheit 2 einstellbar ist. Im geschlossenen Zustand des Kanals 28 (gestrichelt dargestellte Stellung der Bypassklappe 32) wird die Luft über einen Bypasskanal 34 unmittelbar dem Fahrzeuginnenraum zugeführt. In weiteren - nicht dargestellten - Ausführungsformen der Erfindung können der Umlufttrockner 20 und der Filter 30 in separaten Luftführungskanälen vorgesehen sein, die jeweils über einen Bypasskanal überbrückbar sind. Jeder dieser Bypasskanäle ist mit einer von der Steuereinheit 2 angesteuerten Bypassklappe verschließbar.

## Patentansprüche

1. Heiz- oder Klimaanlage für ein Fahrzeug mit einem steuerbaren Luftführungselement (1), mit einem Schadgassensor (6) zur Detektion der Schadstoffkonzentration der Außenluft, mit einem Außentemperatursensor (10) zur Detektion der Außenlufttemperatur ($T_A$) und mit einer Steuereinheit (2) zur Erzeugung eines von dem Außentemperatursensor (10) und dem Schadgassensor (6) abhängigen Steuersignals, wobei das Steuersignal das Luftführungselement (1) beaufschlagt und in eine Umluftstellung und/oder in eine Frischluftstellung verstellt, **dadurch gekennzeichnet, dass** ein Feuchtesensor (5) zur Detektion der Feuchte im Fahrzeuginnenraum (23) vorgesehen ist, wobei die Steuereinheit (2) in Abhängigkeit von Sensorsignalen Mittel zur Einstellung des Luftführungselements (1) aufweist, die das Luftführungselement (1) bei fortwährend hoher Schadstoffbelastung in eine Zwischenstellung bringen, sobald das von dem Feuchtesensor erzeugte Feuchtesignal ($\Phi_i$) derart angestiegen ist, dass mit einem Beschlagen der Scheiben zu rechnen ist.

2. Heiz- oder Klimaanlage nach Anspruch 1, **dadurch gekennzeichnet, dass** ein über einen Bypasskanal (34) überbrückbarer Umlufttrockner (20) und eine Bypassklappe (32) zum Verschließen der Bypasskanals (34) vorgesehen sind, wobei die Luftführung durch den Umlufttrockner (20) von der Steuereinheit (2) mittels der Bypassklappe (32) einstellbar ist.

3. Heiz- oder Klimaanlage nach Anspruch 1 oder 2, **dadurch gekennzeichnet, dass** die Steuereinheit (2) das Luftführungselement (1) so einstellt, dass die Schadstoffbelastung im Fahrzeuginnenraum (23) minimiert und die Feuchte ($\Phi$) im Fahrzeuginnenraum (23) unterhalb eines maximalen Feuchtewertes ($\Phi_{max}$) bleibt.

4. Heiz- oder Klimaanlage nach einem der vorherigen Ansprüche, **dadurch gekennzeichnet, dass** ein weiterer Feuchtesensor (5a) zur Detektion der Außenfeuchte ($\Phi_a$) vorgesehen ist wobei das Außenfeuchtesensorsignal (3a) bei der Regelung der Innenraumfeuchte durch das Luftführungselement (1) berücksichtigt wird.

5. Heiz- oder Klimaanlage nach Anspruch 3, **dadurch gekennzeichnet, dass** eine Scheibentemperaturrecheneinheit (9) vorgesehen ist, wobei die Scheibentemperaturrecheneinheit (9) aus den Sensorsignalen des Außentemperatursensors (10) und eines Innentemperatursensors (8) die Scheibentemperatur ($T_S$) berechnet, und dass eine Feuchterecheneinheit (7) aus der berechneten Scheibentemperatur ($T_S$) und dem Sensorsignal des Innentemperatursensors (8) den maximalen Feuchtewert ($\Phi_{max}$) für den Fahrzeuginnenraum (23) berechnet.

6. Heiz- oder Klimaanlage nach Anspruch 5, **dadurch gekennzeichnet, dass** die Steuereinheit (2), die Feuchterecheneinheit (7) und die Scheibentemperaturrecheneinheit (9) in einem Baustein integriert sind, der einen Mikroprozessor aufweist.

7. Heiz- oder Klimaanlage nach einem der vorherigen Ansprüche, **dadurch gekennzeichnet, dass** die Frischluft und/oder Umluft über eine Filtereinheit (30) geführt ist.

8. Heiz- oder Klimaanlage nach Anspruch 2 und 7, **dadurch gekennzeichnet, dass** der Umlufttrockner (20) und die Filtereinheit (30) ein integrales Bauteil bilden.

9. Heiz- oder Klimaanlage nach Anspruch 7, **dadurch gekennzeichnet, dass** die Filtereinheit (30) über wenigstens einen Bypasskanal (34) überbrückbar ist.

10. Heiz- oder Klimaanlage nach Anspruch 9, **dadurch gekennzeichnet, dass** der Bypasskanal (34) durch eine Bypassklappe (32) verschließbar ist.

11. Verfahren zur Steuerung einer Heiz- oder Klimaanlage eines Fahrzeugs, wobei die dem Fahrzeuginnenraum (23) zuzuführende Umluft und Frischluft durch die Stellung eines Luftführungselements (1) gesteuert wird und wobei das Luftführungselement (1) in Abhängigkeit von sensorisch erfaßten Signalen in eine Umluftstellung und/oder eine Frischluftstellung verstellt wird,
**dadurch gekennzeichnet, dass**
das Luftführungselement (1) bei fortwährend hoher Schadstoffbelastung in eine Zwischenstellung gebracht wird; sobald ein von einem Feuchtesensor (5) erzeugtes Feuchtesignal ($\Phi_i$) derart angestiegen ist, dass mit einem Beschlagen der Scheiben zu rechnen ist.

12. Verfahren nach Anspruch 11, **dadurch gekennzeichnet, dass** das Luftführungselement (1) in Abhängigkeit der sensorisch erfaßten Signale stetig in eine den Umluftanteil erhöhende oder verringernde Stellung verstellbar ist.

13. Verfahren nach Anspruch 11 oder 12, **dadurch gekennzeichnet, dass** der durch die Stellung des Luftführungselements (1) hervorgerufene Umluftanteil des Zuluftstroms derart verändert wird, dass der momentane Feuchtewert ($\Phi_{ist}$) einem Sollfeuchtewert ($\Phi_{soll}$) angenähert wird.

14. Verfahren nach Anspruch 13, **dadurch gekennzeichnet, dass** der Sollfeuchtewert ($\phi_{soll}$) mit ansteigender Schadstoffkonzentration der Umgebungsluft vergrößert wird.

15. Verfahren nach einem der vorhergehenden Ansprüche 11 bis 14, **dadurch gekennzeichnet, dass** in Abhängigkeit von dem Schadgassensorsignal (4) wenigstens ein Teil der Frischluft in einer Filtereinheit (30) gefiltert wird.

16. Verfahren nach einem der vorhergehenden Ansprüche 11 bis 15, **dadurch gekennzeichnet, dass** die Umluft über einen Umlufttrockner (20) geführt wird.

**Claims**

1. Heating or air conditioning system with a controllable air guidance element (1), a pollution gas sensor (6) for the detection of the pollutant concentration of the surrounding air, an outside temperature sensor (10) for the detection of the temperature of the surrounding air ($T_A$) and a control unit (2) for the generation of a control signal determined by the outside temperature sensor (10) and the pollution gas sensor (6), whereby the control signal acts on the air guidance elements (1), switching them to a fresh air position and/or to a recirculation air position, **characterised in that**
a humidity sensor (5) for the detection of humidity within the passenger compartment (23) of the vehicle is provided, whereby the control unit (2) is provided with means for the adjustment of the air guidance element (1) in dependence on sensor signals, to switch the air guidance element (1) to an intermediate position at continuously high pollutant loading as soon as the humidity signal ($\Phi_i$) generated by the humidity sensor reaches a level at which the fogging of the windows is to be expected.

2. Heating or air conditioning system according to claim 1, **characterised in that** a recirculation air drier (20) which can be bypassed via a bypass duct (34) and a bypass flap (32) for closing the bypass duct (34) are provided, whereby the air path through the recirculation air drier (20) can be adjusted by the control unit (2) by means of the bypass flap (32).

3. Heating or air conditioning system according to claim 1 or 2, **characterised in that** the control unit (2) so adjusts the air guidance element (1) that pollutant loading within the passenger compartment (23) of the vehicle is minimised and the humidity ($\Phi$) within the passenger compartment (23) remains below a maximum level ($\Phi_{max}$).

4. Heating or air conditioning system according to any of the preceding claims,
**characterised in that** a further humidity sensor (5a) for the detection of the humidity ($\Phi_a$) of the surrounding air is provided, whereby the signal (3a) of the outside humidity sensor is taken into account when controlling the humidity within the passenger compartment by means of the air guidance element (1).

5. Heating or air conditioning system according to claim 3, **characterised in that** a calculating unit (9) for window temperature is provided, whereby the calculating unit (9) for window temperature calculates the window temperature ($T_S$) from the sensor signals of the outside temperature sensor (10) and of an inside temperature sensor (8), and **in that** a calculating unit (7) for humidity calculates the maximum humidity level ($\Phi_{max}$) for the passenger compartment (23) of the vehicle from the calculated window temperature ($T_S$) and the sensor signal of the inside temperature sensor (8).

6. Heating or air conditioning system according to claim 5, **characterised in that** the control unit (2), the calculating unit (7) for humidity and the calculating unit (9) for window temperature are integrated into a module containing a microprocessor.

7. Heating or air conditioning system according to any of the preceding claims, **characterised in that** the fresh air and/or the recirculation air is/are passed through a filter unit (30).

8. Heating or air conditioning system according to claims 2 and 7, **characterised in that** the recirculation air drier (20) and the filter unit (30) form an integral component.

9. Heating or air conditioning system according to claim 7, **characterised in that** the filter unit (30) can be bypassed via a bypass duct (34).

10. Heating or air conditioning system according to claim 9, **characterised in that** the bypass duct (34) can be closed by a bypass flap (32).

11. Method for the control of a heating or air conditioning system of a vehicle, whereby the recirculation air and the fresh air to be supplied to the passenger compartment (23) of the vehicle are controlled by the position of an air guidance element (1) and whereby the air guidance element (1) is switched to a recirculation position and/or a fresh air position in dependence on signals picked up by sensors, **characterised in that** the air guidance element (1) is switched to an intermediate position at continuously high pollutant loading as soon as the humidity signal ($\Phi_i$) generated by the humidity sensor (5) reaches a level at which the fogging of the windows is to be expected.

12. Method according to claim 11, **characterised in that** the air guidance element (1) is continuously adjustable towards a position either increasing or decreasing the recirculation air component in dependence on the signals picked up by sensors.

13. Method according to claim 11 or 12, **characterised in that** the recirculation air component of the fresh air inflow based on the position of the air guidance element (1) is so adjusted that the current humidity level ($\Phi_{ist}$) approaches a desired humidity level ($\Phi_{soll}$).

14. Method according to claim 13, **characterised in that** the desired humidity level ($\Phi_{soll}$) increases with increasing pollutant concentration of the surrounding air.

15. Method according to any of the preceding claims 11 to 14, **characterised in that** at least part of the fresh air is filtered in a filter unit (30) in dependence on the signal (4) of the pollution gas sensor.

16. Method according to any of the preceding claims 11 to 15, **characterised in that** the fresh air is supplied via a fresh air drier.

## Revendications

1. Installation de chauffage ou de climatisation pour un véhicule avec un élément de guidage d'air (1) réglable, avec un capteur de gaz polluant (6) pour détecter la concentration des produits polluants de l'air extérieur, avec un capteur de température extérieure (10) pour détecter la température de l'air extérieur ($T_E$) et avec une unité de commande (2) pour générer un signal de commande dépendant du capteur de température extérieure (10) et du capteur de gaz polluant (6), le signal de commande chargeant l'élément de guidage d'air (1) et le déplaçant en position circulation d'air et/ou air frais,
   **caractérisé en ce que**
   il est prévu un capteur d'humidité (5) pour détecter l'humidité dans l'habitacle du véhicule (23), l'unité de commande (2) présentant suivant les signaux du capteur des moyens de réglage de l'élément de guidage d'air (1) qui placent l'élément de guidage d'air (1) dans une position intermédiaire en cas de charge polluante élevée constante dès que le signal d'humidité ($\phi_i$) généré par le capteur d'humidité a augmenté à tel point que de la buée risque de se former sur les vitres.

2. Installation de chauffage ou de climatisation selon la revendication 1 **caractérisée en ce qu'**il est prévu un sécheur d'air circulé (20) pouvant être shunté via un canal de dérivation (34) et un clapet de dérivation (32) permettant de fermer le canal de dérivation (34), le guidage d'air par le sécheur d'air circulé (20) pouvant être réglé par l'unité de commande (2) à l'aide du clapet de dérivation (32).

3. Installation de chauffage ou de climatisation selon la revendication 1 ou 2 **caractérisée en ce que** l'unité de commande (2) règle l'élément de guidage d'air (1) de manière à ce que la charge polluante dans l'habitacle du véhicule (23) soit minimisée et à ce que l'humidité ($\phi$) dans l'habitacle du véhicule (23) reste inférieure à la valeur d'humidité maximale ($\phi_{max}$).

**4.** Installation de chauffage ou de climatisation selon l'une quelconque des revendications précédentes **caractérisée en ce qu'**un autre capteur d'humidité (5a) est prévu pour détecter l'humidité extérieure ($\phi_e$), le signal du capteur d'humidité extérieure (3a) étant pris en compte par l'élément de guidage d'air (1) pour le réglage de l'humidité de l'habitacle.

**5.** Installation de chauffage ou de climatisation selon la revendication 3 **caractérisée en ce qu'**une unité de calcul de température des vitres (9) est prévue, l'unité de calcul de température des vitres (9) calculant la température des vitres ($T_s$) à partir des signaux du capteur de température extérieure (10) et d'un capteur de température intérieure (8) et **en ce qu'**une unité de calcul d'humidité (7) calcule la valeur d'humidité maximale ($\phi_{max}$) pour l'habitacle intérieur (23) du véhicule à partir de la température calculée des vitres ($T_s$) et du signal du capteur de température intérieure (8).

**6.** Installation de chauffage ou de climatisation selon la revendication 5 **caractérisée en ce que** l'unité de commande (2), l'unité de calcul d'humidité (7) et l'unité de calcul de température des vitres (9) sont intégrées dans un bloc fonctionnel qui comporte un microprocesseur.

**7.** Installation de chauffage ou de climatisation selon l'une quelconque des revendications précédentes **caractérisée en ce que** l'air frais et/ou l'air circulé est amené via une unité de filtre (30).

**8.** Installation de chauffage ou de climatisation selon les revendications 2 et 7 **caractérisée en ce que** le sécheur d'air circulé (20) et l'unité de filtre (30) forment un bloc fonctionnel intégré.

**9.** Installation de chauffage ou de climatisation selon la revendication 7 **caractérisée en ce que** l'unité de filtre (30) peut être shuntée via au moins un canal de dérivation (34).

**10.** Installation de chauffage ou de climatisation selon la revendication 9 **caractérisée en ce que** le canal de dérivation (34) peut être fermé par un clapet de dérivation (32).

**11.** Procédé pour contrôler une installation de chauffage ou de climatisation d'un véhicule, l'air frais et l'air circulé amenés dans l'habitacle du véhicule (23) étant contrôlés par la position d'un élément de guidage d'air (1) et l'élément de guidage d'air (1) étant déplacé dans une position circulation d'air et/ou une position air frais en fonction des signaux envoyés par des capteurs,

    **caractérisé en ce que**
    l'élément de guidage d'air (1) est amené dans une position intermédiaire en cas de charge polluante élevée constante dès qu'un signal d'humidité ($\phi_l$) généré par un capteur d'humidité (5) a augmenté à tel point que de la buée risque de se former sur les vitres.

**12.** Procédé selon la revendication 11 **caractérisé en ce que** l'élément de guidage d'air (1) peut toujours être déplacé dans une position augmentant ou diminuant la proportion d'air circulé en fonction des signaux envoyés par les capteurs.

**13.** Procédé selon la revendication 11 ou 12 **caractérisé en ce que** la proportion d'air circulé du courant d'air définie par la position de l'élément de guidage d'air (1) est modifiée de manière à ce que la valeur d'humidité momentanée ($\phi_{réelle}$) se rapproche d'une valeur d'humidité théorique ($\phi_{théorique}$).

**14.** Procédé selon la revendication 13 **caractérisé en ce que** la valeur d'humidité théorique ($\phi_{théorique}$) augmente avec la concentration croissante en produits polluants de l'air ambiant.

**15.** Procédé selon l'une quelconque des revendications 11 à 14 **caractérisé en ce qu'**au moins une partie de l'air frais est filtrée dans une unité de filtre (30) en fonction du signal du capteur de gaz polluant (4).

**16.** Procédé selon l'une quelconque des revendications 11 à 15 **caractérisé en ce que** l'air circulé est amené via un sécheur d'air circulé (20).

Fig. 1

äußere
Schadstoffkonzentration $S$

Fig. 2

$\phi$ max

$\phi$

$\phi$ min

Umluft

0%

Fig. 3

100%

Umluft

steigende
Schadstoffbelastung

0%

$\phi$ min

$\phi$ max

$\phi_i$

Start

Scheibentemperatur berechnen  ~ 12

maximal zulässige
Feuchte berechnen  ~ 13
Phimax

Schad-
stoffbelas-  14
tung ─

ja

nein

Phisoll=Phimax-x1

Phisoll=Phimax-x2

Anmerkung:
x1 > x2

Phiist
<  15
Phisoll

nein

Phiist
<  16
Phisoll

nein

ja

mehr Umluft

weniger Umluft

100% Umluft

Ende

Fig. 5

Fig. 6